(19) **Europäisches Patentamt**
**European Patent Office**
**Office européen des brevets**

(11) **EP 2 396 086 B1**

(12) **FASCICULE DE BREVET EUROPEEN**

(45) Date de publication et mention
de la délivrance du brevet:
**08.03.2017 Bulletin 2017/10**

(51) Int Cl.:
***H04L 12/18*** *(2006.01)*

(21) Numéro de dépôt: **10707579.8**

(86) Numéro de dépôt international:
**PCT/FR2010/050105**

(22) Date de dépôt: **25.01.2010**

(87) Numéro de publication internationale:
**WO 2010/092272 (19.08.2010 Gazette 2010/33)**

(54) **PROCÉDÉ DE COMMUNICATION**

VERFAHREN ZUR KOMMUNIKATION

COMMUNICATION METHOD

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **12.02.2009 FR 0950877**

(43) Date de publication de la demande:
**21.12.2011 Bulletin 2011/51**

(73) Titulaire: **Orange**
**75015 Paris (FR)**

(72) Inventeurs:
• **LEMOINE, Benoît**
**F-22300 Ploubezre (FR)**

• **IBRAHIM, Houmed**
**F-22300 Lannion (FR)**
• **LE LOUEDEC, Yannick**
**F-22190 PLERIN (FR)**

(56) Documents cités:
**US-A1- 2003 147 386    US-A1- 2004 066 775**

• LIU J ET AL: "Distributed distance measurement for large-scale networks" COMPUTER NETWORKS, ELSEVIER SCIENCE PUBLISHERS B.V., AMSTERDAM, NL, vol. 41, no. 2, 5 février 2003 (2003-02-05), pages 177-192, XP004406475 ISSN: 1389-1286

**Description**

L'invention concerne une technique de collecte de données temps réel diffusées dans un groupe de diffusion.

L'invention se situe dans les domaines des télécommunications et plus particulièrement des réseaux de communication par paquets. Dans ce type de réseaux, il est possible d'acheminer des flux de données associées à des services temps réel.

Le protocole Internet, appelé IP pour "Internet Protocol", développé par l'IETF, pour "Internet Engineering Task Force", est mis en oeuvre sur les réseaux de communication par paquets aussi bien pour supporter des services non temps réel tels que des services de transfert de données, de consultation de pages web, de messagerie électroniques, que des services temps réels ou conversationnels, tels que la téléphonie sur IP, la vidéo téléphonie sur IP ou encore la diffusion vidéo sur IP.

Une méthode pour transporter des flux de données présentant des contraintes de temps réel est prévue par l'IETF dans la norme RFC 3550. Les flux de données temps réel sont généralement composés de paquets RTP, pour "Real Time Protocol", un paquet RTP comprenant des données numériques, issues d'une conversion d'analogique en numérique de signaux collectés par des capteurs ou du traitement numérique de la résultante de la conversion d'analogique en numérique de signaux provenant de ces capteurs. Les données temps réel peuvent également correspondre à des données numériques issues de signaux collectés par un ensemble de capteurs distribués comme par exemple dans le cas d'observation d'un trafic routier.

A un flux de données temps réel est associé un flux de données de contrôle ou flux RTCP pour "Real Time Control Protocol". Les données de contrôle permettent notamment à un équipement récepteur d'un flux de données temps réel de notifier à un ou des équipements émetteurs de ces flux de données la qualité du signal reçu. A cet effet, on distingue parmi les données de contrôle RTCP, des données de contrôle appelées SR pour "Sender Report" émises par des équipements récepteurs, qui émettent également un flux de données temps réel RTP et des données de contrôle appelées RR pour "Receiver Report" émises par des équipements uniquement récepteurs ou par des équipements récepteurs émettant un flux de données temps réel, dans le cas où le nombre d'équipements émetteurs pour une même communication dépasse trente et un.

Selon la norme RFC 3550, les données de contrôle RTCP contiennent différents champs. Ces champs d'une donnée de contrôle RTCP permettent notamment à un premier équipement de notifier à un deuxième équipement émetteur de paquets RTP:

- un instant d'émission de la donnée de contrôle NTP pour "Network Time Protocol",
- un nombre de paquets RTP reçus,
- un taux de paquets RTP perdus,
- une gigue inter-arrivée,
- un premier champ d'information temporelle appelé LSR pour "Last Sender Report", correspondant à l'instant d'émission de la dernière donnée de contrôle RTCP SR émise par le deuxième équipement et reçue au premier équipement,
- un deuxième champ d'information temporelle appelé DLSR pour "Delay since Last Sender Report", correspondant au temps écoulé entre la réception de cette dernière donnée de contrôle paquet RTCP SR émise par le deuxième équipement et l'instant d'émission de cette donnée de contrôle RTCP.

Ces deux champs d'information temporelle permettent à un équipement émetteur de données de contrôle RTCP SR de calculer un temps aller retour pour un échange de données à destination d'un autre équipement émetteur de données de contrôle RTCP SR. A titre d'exemple, si SSRC_r est un équipement récepteur qui transmet une donnée de contrôle relative à un équipement émetteur SSRC_n, la donnée de contrôle comprenant les deux champs d'information temporelle LSR et DLSR, l'équipement émetteur SSRC_n peut déterminer le temps d'aller-retour rtt entre lui-même et l'équipement récepteur SSRC_r à partir des deux champs LSR et DLSR et de l'instant A où il reçoit la donnée de contrôle RTCP SR, avec rtt= A - LSR - DLSR.

On se place par la suite dans le cas où une pluralité de sources de données émet un flux de données temps réel respectif composé de paquets RTP en mode diffusé ou mode multicast. Une première source de cette pluralité émet des données temps réel et les autres sources reçoivent ce flux de données. Une pluralité de flux de données de contrôle RTCP doit être établie, un tel flux s'échangeant entre la première source et chacune des autres sources. Pour chacune des autres sources, la première source peut déterminer un temps de transmission et utiliser chacun des temps de transmission déterminés pour agréger les flux de données temps réel des autres sources avec son propre flux de données temps réel. Le nombre de flux de données de contrôle RTCP augmente en fonction du nombre de sources de données temps réel RTP. Pour une source de diffusion de données temps réel d'un groupe de diffusion multicast de grande taille, la gestion des flux de données de contrôle RTCP s'avère extrêmement complexe et consommatrice de ressources processeur et mémoire.

Les demandes de brevet US 2003/0147386 et US 2004/0066775 et l'article "Distributed distance measurement for large-scale networks", Liu J. et al, Computer Networks: The International Journal of Computer and Télécommunications Networking, Volume 41 Issue 2, 2003, pages 177-192 divulguent des procédés de détermination d'un temps de transmission entre noeuds de communication exemplifiant l'art antérieur.

Un des buts de l'invention est de remédier à des insuffisances/inconvénients de l'état de la technique et/ou d'y apporter des améliorations.

Selon un premier aspect, l'invention a pour objet un procédé de communication dans un groupe de diffusion, conforme à la revendication 1.

Les données temps réel sont par exemple diffusées selon le protocole RTP et les échanges de données de contrôle s'effectuent selon le protocole RTCP. Grâce au procédé de communication, une source du groupe maintient un et un seul échange de données de contrôle entre elle-même et un des membres du groupe. Cet échange de données de contrôle s'effectue en particulier avec le serveur. Toutefois, l'échange de données avec le serveur est effectué en mode diffusé ou mode multicast. Ceci permet aux autres membres du groupe de recevoir une copie des données de contrôle transmises par la source au serveur. Ainsi, des échanges de données de contrôle entre la source et les autres sources du groupe ne sont pas nécessaires. Par ailleurs, tous les membres du groupe reçoivent en complément des données de contrôle liées à leur propre échange de données avec le serveur, les données de contrôle émises par le serveur à destination des autres membres du groupe. Cette organisation particulière des échanges de données de contrôles permet d'économiser les ressources processeur et mémoire des sources du groupe puisqu'elles n'ont pas à gérer une pluralité d'échanges de données de contrôle. De plus, lorsqu'une nouvelle source rejoint le groupe de diffusion, la source ne doit pas établir un nouvel échange de données de contrôle avec la nouvelle source. Seul le serveur doit établir un échange de données de contrôle avec la nouvelle source.

Une source du groupe recevant les données de contrôle échangées entre une autre source du groupe et le serveur peut déterminer à partir de ces données de contrôle et de ses propres données de contrôle un temps de transmission entre elle-même et l'autre source du groupe. La modification d'architecture apportée par l'invention dans un groupe de diffusion multicast permet ainsi d'obtenir les mêmes informations que dans une architecture non centralisée, tout en économisant les ressources mémoire et processeur des sources, comme décrit précédemment.

De nombreuses applications professionnelles ou scientifiques de collecte d'information distribuées nécessitent d'agréger des informations en provenance de différentes sources avec de fortes contraintes de temps réel. La mise en oeuvre de ces applications reste souvent confinée dans un espace restreint et déterminé, de façon à limiter les perturbations non prévisibles et à caractériser finement les perturbations prévues afin d'appliquer une correction efficace à ces perturbations. Lorsqu'on souhaite étendre l'offre de ces applications à des espaces non restreints, il est alors nécessaire que les sources soient synchronisées. Une première solution est d'introduire des liaisons de communication synchrones entre les sources afin de caractériser finement les délais de communication pour les prendre en compte au moment de l'agrégation des informations. Une deuxième solution consiste à utiliser des sources comportant une horloge extrêmement stable. Les coûts induits par ces deux solutions ne sont pas compatibles avec des applications grand public. L'invention propose ainsi une solution simple à mettre en oeuvre et ne nécessitant pas d'effectuer des ajouts d'équipements ou de liaisons onéreux.

Les informations temporelles utilisées pour la détermination du temps de transmission sont ainsi des champs d'information prévus pour le protocole RTCP. La mise en oeuvre de l'invention est ainsi compatible avec la version existante de ce protocole.

En outre, le procédé de communication dans un groupe de diffusion peut comprendre :

- une étape de réception en provenance du serveur d'une agrégation des données temps réel émises par l'ensemble des sources émettrices ;
- une étape de détermination d'une donnée temps réel correspondant à une différence entre des informations temps réel collectées par la première source, l'agrégation reçue et des données temps réel reçues en provenance des autres sources émettrices, les instants d'émission des données reçues étant déterminés à partir des temps de transmission respectifs ;
- une étape d'émission de la donnée temps réel en mode multicast.

Grâce aux temps de transmission respectifs déterminés pour les différents membres du groupe, on traite les informations temps réel collectées par la source et les données temps réel reçues du serveur de collecte ou des autres sources en fonction d'un décalage en temps entre l'instant d'émission de la donnée temps réel par le membre du groupe considéré et l'instant de réception de celle-ci à la source. La différence entre l'information temps réel collectée par la source et les données temps réel reçues permet à une source de générer ainsi une donnée temps réel qui ne présente pas de redondance d'information avec les autres données temps réel. Seules des données temps réel ainsi générées et donc utiles sont transmises dans le réseau. Les sources disposant en temps réel d'un retour d'information peuvent ainsi vérifier que les données temps réel qu'elles envoient sont pertinentes au regard de ce retour d'information.

Le serveur en tant que membre du groupe de diffusion recevant les données temps réel des différentes sources est ainsi en mesure d'agréger les données temps réel en provenance des différentes sources et de le retransmettre au groupe comme retour d'information. L'agrégation générée par le serveur peut restreindre les sources prises en compte à celles pour lesquelles les temps de transmission respectifs sont inférieurs à un seuil prédéterminé. Ainsi, le serveur est en mesure de fournir un retour d'informations plus rapidement du fait qu'il effectue l'agrégation sans attendre des données temps réel, dont le temps d'acheminement respectif dans le réseau de communication est important. D'autre part, le temps nécessaire pour générer le retour d'information est également réduit du fait qu'il n'est déterminé qu'à partir d'un nombre restreint de sources d'information.

De plus, le procédé de communication dans un groupe de diffusion peut également comprendre en outre une étape d'agrégation des données temps réel reçues, les instants d'émission des données reçues étant déterminés à partir des temps de transmission respectifs.

Une agrégation de l'ensemble des données temps réel est également effectuée en prenant en compte un décalage en temps entre l'instant d'émission de la donnée temps réel par le membre du groupe considéré et l'instant de réception de celle-ci à la source afin de fournir une consultation locale à la source.

Selon un deuxième aspect, l'invention concerne également un dispositif de communication dans un groupe de diffusion, conforme à la revendication 4.

Selon un troisième aspect, l'invention concerne également un système de communication dans un groupe de diffusion, conforme à la revendication 5.

Dans un tel système, le serveur peut comprendre en outre un module d'agrégation de données temps réel émises par les sources en fonction d'un décalage temporel entre un instant de collecte d'une donnée temps réel et un instant de réception au serveur de ladite donnée.

Selon un quatrième aspect, l'invention concerne également un programme d'ordinateur comportant des instructions pour la mise en oeuvre du procédé de communication dans un groupe de diffusion tel que décrit précédemment par un dispositif de communication dans un groupe de diffusion, lorsque ce programme est exécuté par un processeur.

L'invention sera mieux comprise à l'aide de la description suivante d'un mode de réalisation particulier du procédé de l'invention, en référence aux dessins annexés sur lesquels :

- la figure 1 représente un système de communication dans un groupe de diffusion selon un mode particulier de réalisation de l'invention ;
- la figure 2 représente un diagramme illustratif d'une mise en oeuvre du procédé selon un mode particulier de réalisation de l'invention ;
- la figure 3 représente les étapes du procédé telles qu'elles sont mises en oeuvre par un serveur selon un mode particulier de réalisation de l'invention ;
- la figure 4 représente les étapes du procédé telles qu'elles sont mises en oeuvre par un client de collecte selon un mode particulier de réalisation de l'invention ;
- la figure 5 représente un dispositif de communication dans un groupe de diffusion selon un mode particulier de réalisation de l'invention ;
- la figure 6 représente un serveur de collecte de données temps réel selon un mode particulier de réalisation de l'invention.

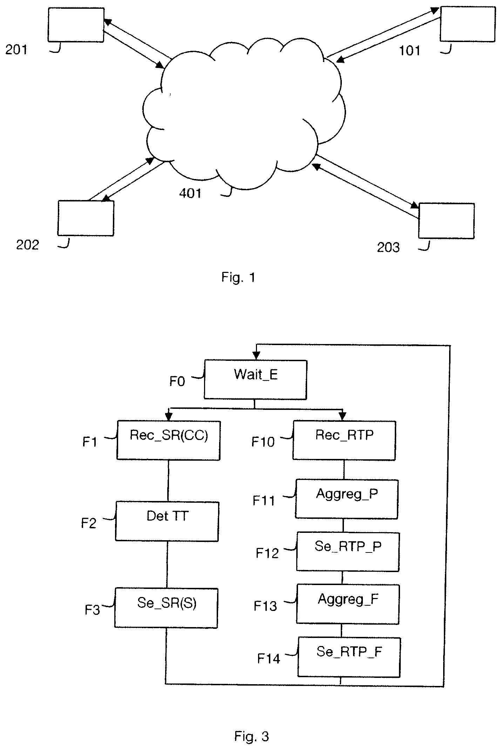

Sur la figure 1 est représenté un système de communication dans un groupe de diffusion dans son environnement. Ce système comprend un serveur 101 de collecte, deux clients 201, 202 de collecte et un client 203 de consultation. Le serveur 101 de collecte et les deux clients 201, 202 de collecte appartiennent à un même groupe de diffusion. Par souci de simplification, seuls deux clients de collecte et un client de consultation sont représentés. On note que le système n'est pas limité à ces seuls éléments.

Un réseau 401 de communication par paquets permet un acheminement de paquets entre les différents éléments du système de communication dans un groupe de diffusion. Il dispose notamment de fonctions de transport en mode diffusé ou multicast. Le réseau 401 peut être un réseau de type IP.

Les clients 201, 202 de collecte sont agencés pour collecter des informations temps réel. Ces informations temps réel peuvent être liées à différents services, tels que le transport de la voix sur un réseau de type IP, un service de transport de vidéo sur IP, un service d'observation de trafic routier ou tout autre service de collecte distribuée d'informations temps réel.

Les clients 201, 202 de collecte sont en outre agencés pour diffuser des données temps réel dans le groupe de diffusion. Ainsi, les clients 201, 202 sont également des sources émettrices de données temps réel. Par la suite, les termes client de collecte et source émettrice de données temps réel sont utilisés indifféremment. Par exemple, les données temps réel sont diffusées dans des paquets RTP, conformément à la RFC 3550. A titre d'exemple, les paquets RTP diffusés par le client 201 de collecte sont reçus par le serveur 101 de collecte et le client 202 de collecte. Des paquets RTP sont par exemple diffusés toutes les dix millisecondes.

Des échanges de données de contrôle sont mis en oeuvre dans le groupe de diffusion pour chaque client de collecte du groupe de diffusion avec le serveur 101 de collecte. Ainsi, des données de contrôle sont échangées entre le client 201 de collecte et le serveur 101 de collecte ainsi qu'entre le client 202 de collecte et le serveur 101 de collecte. Les données de contrôle sont par exemple échangées selon le protocole RTCP, conformément à la RFC 3550. Elles sont échangées selon une fréquence moins élevée que les paquets RTP, par exemple de l'ordre de la seconde.

Un client de collecte 201 ne maintient ainsi qu'un seul et unique échange de données avec les membres du groupe, notamment avec le serveur 101 de collecte. Dans une architecture de l'art antérieur, le client de collecte 201 doit maintenir des échanges de données avec l'ensemble des autres clients de collecte. Si un nouveau client de collecte se joint au groupe de diffusion, le client 201 de collecte doit également établir un nouvel échange de données pour ce nouveau client de collecte. Selon l'invention, un seul et unique échange de données est mis en place entre le client de collecte 201 et le serveur 101 de collecte. Ainsi, les ressources processeur et mémoire du client de collecte sont économisées.

Selon l'invention, il est prévu que les données de contrôle sont émises en mode multicast, c'est-à-dire encapsulées dans des paquets IP multicast. Ainsi, le client 201 de collecte va recevoir les données de contrôle transmises par le client 202 de collecte au serveur 101 de collecte. L'encapsulation dans des paquets IP multicast est prévue dans le RFC 3550. Contrairement à des paquets IP unicast qui sont acheminés vers une unique destination identifiée par l'adresse de destination IP, les paquets IP multicast sont acheminés dans le réseau 401 et répliqués au plus près à destination de clients IGMP ("Internet Group Management Protocol"), défini par exemple en version 2 dans le RFC 2236, les clients IGMP ayant demandé au réseau IP 401 à recevoir les paquets IP émis à destination d'une adresse IP multicast donnée. Cette adresse IP multicast caractérise le groupe de diffusion.

Les paquets RTP et RTCP peuvent aussi bien être transportés dans des paquets IPv4 que IPv6.

A cet effet et conformément à la RFC 768, les paquets RTP peuvent être au préalable encapsulés dans des paquets UDP ("User Datagram Protocol") et les paquets RTCP sont au préalable encapsulés dans des paquets UDP.

Selon le RFC 3550, un paquet RTCP SR "Sender Report" émis d'un premier équipement à destination d'un deuxième équipement comprend notamment les champs d'informations suivants :

- un instant d'émission de la donnée de contrôle NTP pour "Network Time Protocol",
- un nombre de paquets RTP reçus,
- un taux de paquets RTP perdus,
- une gigue inter-arrivée,
- un premier champ d'information temporelle appelé LSR pour "Last Sender Report", correspondant à l'instant d'émission de la dernière donnée de contrôle RTCP SR émise par le deuxième équipement et reçue au premier équipement, c'est-à-dire une copie du champ NTP de la dernière donnée de contrôle reçue,
- un deuxième champ d'information temporelle appelé DLSR pour "Delay since Last Sender Report", correspondant au temps écoulé entre la réception de cette dernière donnée de contrôle paquet RTCP SR émise par le deuxième équipement et l'instant d'émission de cette donnée de contrôle RTCP.

Le serveur 101 de collecte transmet ainsi en mode multicast une donnée de contrôle RTCP SR 501 comprenant pour le client 201 de collecte, des informations temporelles qui sont notées par la suite :

- NTP1101 pour l'instant d'émission de la donnée de contrôle,
- LSR201 pour le premier champ d'information temporelle et DLSR201 pour le deuxième champ d'information temporelle.

Le serveur 101 de collecte transmet également en mode multicast une donnée de contrôle RTCP SR 502 comprenant pour le client 202 de collecte, des informations temporelles qui sont notées par la suite :

- NTP2101 pour l'instant d'émission de la donnée de contrôle,
- LSR202 pour le premier champ d'information temporelle et DLSR202 pour le deuxième champ d'information temporelle.

Le client 201 de collecte transmet au serveur 101 de collecte en mode multicast une donnée de contrôle RTCP SR 601 comprenant des informations temporelles qui sont notées par la suite : NTP201 pour l'instant d'émission de la donnée de contrôle, LSR1101 pour le premier champ d'information temporelle et DLSR1101 pour le deuxième champ d'information temporelle.

Le client 202 de collecte transmet ainsi au serveur 101 de collecte en mode multicast une donnée de contrôle RTCP SR 602 comprenant des informations temporelles qui sont notées par la suite : NTP202 pour l'instant d'émission de la donnée de contrôle, LSR2101 pour le premier champ d'information temporelle et DLSR2101 pour le deuxième champ d'information temporelle.

Cette ou ces données de contrôle permettent ainsi au client 201 de collecte d'obtenir les informations temporelles relatives à l'échange de données de contrôle entre le serveur 101 de collecte et le client 202 de collecte, sans avoir lui-même établi d'échange de données de contrôle avec le client 202 de collecte.

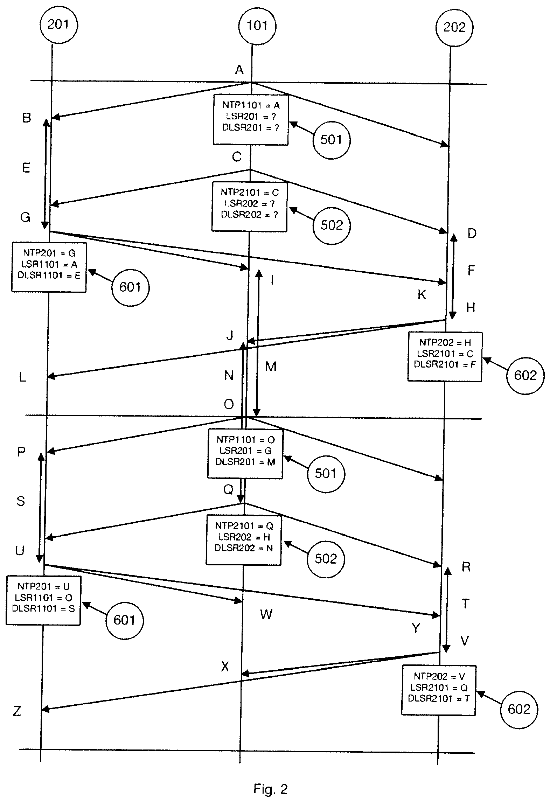

Ces différents échanges de données de contrôle vont maintenant être détaillés en relation avec la figure 2.

A l'instant noté A sur la figure 2, le serveur 101 de collecte émet en mode multicast un premier paquet RTCP SR 501 relatif à un échange de données de contrôle entre lui-même et le client 201 de collecte, comprenant dans le champ NTP1101 la valeur A, un premier champ LSR201 et un deuxième champ DLSR201. Ce premier paquet RTCP SR 501 est reçu notamment par le client 201 de collecte à l'instant B.

A l'instant noté C sur la figure 2, le serveur 101 de collecte émet en mode multicast un premier paquet RTCP SR 502 relatif à un échange de données de contrôle entre lui-même et le client 202 de collecte, comprenant dans le champ NTP2101 la valeur C, un premier champ LSR202 et un deuxième champ DLSR202. Ce premier paquet RTCP SR 502 est reçu notamment par le client 202 de collecte à l'instant D.

A l'instant G, le client 201 de collecte émet en mode multicast un premier paquet RTCP SR 601 comprenant dans le champ NTP201 la valeur G, dans le champ LSR1101 la valeur A et dans le champ DLSR1101 la valeur E égale à la différence entre G et B. Ce premier paquet RTCP SR 601 est reçu à l'instant I par le serveur 101 de collecte et K par le client 202 de collecte.

A l'instant H, le client 202 de collecte émet en mode multicast un premier paquet RTCP SR 602 comprenant dans le champ NTP202 la valeur H, dans le champ LSR2101 la valeur C et dans le champ DLSR2101 la valeur F égale à la différence entre H et D. Ce premier paquet RTCP SR 602 est reçu à l'instant J par le serveur 101 de collecte et L par le client 201 de collecte.

A l'instant O, le serveur 101 de collecte émet en mode multicast un deuxième paquet RTCP SR 501, comprenant dans le champ NTP1101 la valeur O, dans le champ LSR201 la valeur G, dans le champ DLSR201 la valeur M égale à la différence entre O et I. Ce deuxième paquet RTCP SR 501 est reçu à un instant P par le client 201 de collecte.

A l'instant Q, le serveur 101 de collecte émet en mode multicast un deuxième paquet RTCP SR 502, comprenant dans le champ NTP2101 la valeur Q, dans le champ LSR202 la valeur H, dans le champ DLSR202 la valeur N égale à la différence entre Q et J. Ce deuxième paquet RTCP SR 502 est reçu notamment à un instant R par le client 202 de collecte.

A l'instant U, le client 201 de collecte émet en mode multicast un deuxième paquet RTCP SR 601 comprenant dans le champ NTP201 la valeur U, dans le champ LSR1101 la valeur O et dans le champ DLSR1101 la valeur S égale à la différence entre U et P. Ce deuxième paquet RTCP SR 601 est reçu à l'instant W par le serveur 101 de collecte et Y par le client 202 de collecte.

A l'instant V, le client 202 de collecte émet en mode multicast un deuxième paquet RTCP SR 602 comprenant dans le champ NTP202 la valeur V, dans le champ LSR2101 la valeur Q et dans le champ DLSR2101 la valeur T égale à la différence entre V et R. Ce deuxième paquet RTCP SR 602 est reçu à l'instant X par le serveur 101 de collecte et Z par le client 201 de collecte.

Les échanges de données de contrôle 501, 502, 601, 602 se poursuivent ainsi dans le groupe de diffusion.

Lorsque le client 201 de collecte a reçu les deuxièmes paquets RTCP SR 501 et RTCP SR 502 en provenance du serveur 101 de collecte et le deuxième paquet RTCP SR 602 en provenance du client 202 de collecte, le client 201 de collecte met en oeuvre une étape E2 de détermination d'un premier temps de transmission entre lui-même et le serveur 101 de collecte et un deuxième temps de transmission entre lui-même et le client 202 de collecte. Il est bien entendu que la détermination d'un deuxième temps de transmission est effectuée pour l'ensemble des clients de collecte du groupe de diffusion ayant émis des paquets RTCP SR 602.

En ce qui concerne le premier temps de transmission, noté TA par la suite, le client 201 de collecte applique la méthode de calcul telle que spécifiée dans le RFC 3550. Plus précisément, il calcule TA = (P-G-M)/2 où

G est le champ LSR201 du dernier paquet RTCP SR 501 reçu en provenance du serveur et relatif à l'échange de données de contrôle entre lui-même et le serveur,

M est le champ DLSR201 de ce paquet RTCP SR 501,

P correspond à l'instant de réception de ce paquet RTCP SR 501.

La détermination du premier temps de transmission TA est effectuée à la réception d'un paquet RTCP SR 501 en provenance du serveur 101 de collecte.

En ce qui concerne le deuxième temps de transmission, noté TB par la suite, le client 201 de collecte le détermine selon la formule de calcul ci-après :

$$TB = (H+N-G-M-P-T-V)/2 + Z-Q+O$$

où H est le champ LSR202 du dernier paquet RTCP SR 502 reçu en provenance du serveur et relatif à l'échange de données de contrôle entre le serveur et le client 202 de collecte,

N est le champ DLSR202 de ce dernier paquet RTCP SR 502,

Q est le champ NTP2101 de ce dernier paquet RTCP SR 502,

G est le champ LSR201 du dernier paquet RTCP SR 501 reçu en provenance du serveur et relatif à l'échange de données de contrôle entre lui-même et le serveur,

M est le champ DLSR201 de ce dernier paquet RTCP SR 501,

O est le champ NTP1101 de ce dernier paquet RTCP SR 501,

P correspond à l'instant de réception de ce dernier paquet RTCP SR 501,

T est le champ DLSR2101 du dernier paquet RTCP SR 602 reçu émis par le client 202 de collecte et relatif à l'échange de données de contrôle entre lui-même et le serveur,

V est le champ NTP202 de ce dernier paquet RTCP SR 602,

Z correspond à l'instant de réception de ce dernier paquet RTCP SR 602.

La détermination du deuxième temps de transmission TB est effectuée à la réception d'un paquet RTCP SR 602 en provenance du client 202 de collecte. Elle est effectuée pour chaque client de collecte du groupe de diffusion.

Lorsque le serveur 101 de collecte a reçu le deuxième paquet RTCP SR 601 en provenance du client 201 de collecte, le serveur 101 de collecte met en oeuvre une étape F2 de détermination d'un temps de transmission entre lui-même et le client 201 de collecte.

En ce qui concerne ce temps de transmission, noté TC, le serveur 101 de collecte applique la méthode de calcul telle que spécifiée dans le RFC 3550. Plus précisément, il calcule TC = (W-S-O)/2 où

O est le champ LSR1101 du dernier paquet RTCP SR 601 reçu en provenance du client 201 de collecte et relatif à l'échange de données de contrôle entre ce dernier et le serveur,

S est le champ DLSR1101 de ce dernier paquet RTCP SR 601,

W correspond à l'instant de réception de ce dernier paquet RTCP SR 601.

Il est bien entendu que la détermination de ce temps de transmission TC est effectuée pour chaque client de collecte du groupe de diffusion, sur réception d'un paquet RTCP émis par le client de collecte et relatif à l'échange de données de contrôle entre lui-même et le serveur.

L'utilisation de ces différents temps de transmission dans le procédé est détaillée ultérieurement.

Dans une variante, on détermine des temps de transmission lissés, par exemple par application d'un filtre discret d'ordre fini aux dernières valeurs des temps de transmission obtenues.

Le procédé de communication dans un groupe de diffusion tel qu'il est mis en oeuvre par le serveur 101 de collecte va maintenant être décrit en relation avec la figure 3.

Dans une étape F0, le serveur 101 de collecte est en attente d'un événement.

Si on détecte lors d'une étape F1 que l'événement est une réception d'un paquet RTCP SR en provenance d'un client de collecte, le serveur 101 de collecte détermine au cours de l'étape F2 de détermination d'un temps de transmission, telle que décrite précédemment, le temps de transmission TC entre lui-même et le client de collecte ayant émis le paquet RTCP SR.

Dans une étape F3, le serveur 101 de collecte transmet un paquet RTCP SR 501 en mode multicast, tel que décrit précédemment.

Le procédé repasse à l'étape F0 en attente d'un événement.

Si on détecte lors d'une étape F10 que l'événement est une réception de paquets RTP de données temps réel en provenance des clients de collecte, le procédé passe à une étape F11 d'agrégation partielle. Dans cette étape F11 d'agrégation partielle, le serveur 101 de collecte détermine un agrégat partiel, dans lequel il prend en compte à l'aide des temps de transmission respectifs déterminés lors de l'étape F2 pour chaque client de collecte, un décalage temporel entre l'instant de la collecte de la donnée temps réel contenue dans le paquet RTP et l'instant de réception de ce paquet RTP. Plus précisément, les données temps réel sont agrégées en fonction de leurs instants d'émission respectifs déterminés à partir des temps de transmission déterminés. Pour déterminer cet agrégat partiel, le serveur 101 de collecte écarte en outre les paquets RTP reçus en provenance de clients de collecte dont les temps de transmission respectifs déterminés par le serveur 101 de collecte lors de l'étape F2 sont supérieurs à un premier seuil.

Dans une variante de cette étape F11 d'agrégation partielle, le serveur 101 de collecte écarte les paquets RTP reçus en provenance de clients de collecte pour lesquels une qualité de transport est inférieure à un deuxième seuil. La qualité de transport, notamment la gigue ou la perte de paquets RTP, peut être déterminée conformément à la RFC3550 à partir de paramètres inscrits dans les paquets RTP (qualité perçue par le serveur), tels qu'un numéro de séquence, un instant d'émission, un instant de réception, ou bien à partir de paramètres inscrits dans les paquets RTCP (qualité perçue par les clients) tels qu'un taux de perte de paquet, une gigue,...

Dans une autre variante de cette étape F11 d'agrégation partielle, le serveur 101 de collecte écarte les paquets RTP reçus en provenance de clients de collecte pour lesquels un taux de paquets perdus contenu dans le paquet RTCP SR reçu est supérieur à un troisième seuil.

Dans encore une autre variante de cette étape F11 d'agrégation partielle, le serveur 101 de collecte écarte les paquets RTP reçus en provenance de clients de collecte pour lesquels une gigue inter-arrivée contenue dans le paquet RTCP SR reçu est supérieure à un quatrième seuil.

Ces différentes variantes peuvent être effectuées seules ou en combinaison.

Puis dans une étape F12, le serveur 101 de collecte transmet dans un paquet RTP l'agrégat partiel déterminé aux clients 201, 202 de collecte du groupe de diffusion en mode multicast.

Ainsi, les clients 201, 202 de collecte reçoivent rapidement un retour d'information sur la pertinence des informations qu'ils ont envoyées dans les paquets RTP.

Dans une étape F13, le serveur 101 de collecte détermine un agrégat total des paquets RTP reçus des clients de collecte, dans lequel il prend en compte à l'aide des temps de transmission respectifs déterminés lors de l'étape F2 pour chaque client de collecte, un décalage temporel entre l'instant de la collecte de la donnée temps réel contenue dans le paquet RTP et l'instant de réception de ce paquet RTP. Plus précisément, les données temps réel sont agrégées en fonction de leurs instants d'émission respectifs déterminés à partir des temps de transmission déterminés.

Les agrégats peuvent être déterminés au niveau de la couche transport ou bien à un niveau applicatif. Dans ce dernier cas, lors de détermination d'un agrégat partiel, l'algorithme permettant de générer ce dernier peut être plus simple à mettre en oeuvre que celui permettant de générer un agrégat total.

Puis, dans une étape F14, le serveur 101 de collecte transmet au client 203 de consultation un paquet RTP comprenant l'agrégat total déterminé.

Une architecture de type client - serveur permet ainsi à un serveur de collecter les informations temps réel collectées par les sources, d'en générer une synthèse pour des clients de consultation. Cependant, dans un réseau comprenant un nombre important de sources, la collecte d'informations et la génération d'une synthèse d'informations par le serveur peuvent entraîner un délai important non compatible avec le fait que les sources participant à la collecte d'informations doivent obtenir avec un délai très faible un retour au moins partiel de la synthèse d'information. Ainsi, les agrégats partiel et total permettent de satisfaire aussi bien les besoins aussi bien des sources que des clients de consultation.

Le procédé repasse à l'étape F0 en attente d'un événement.

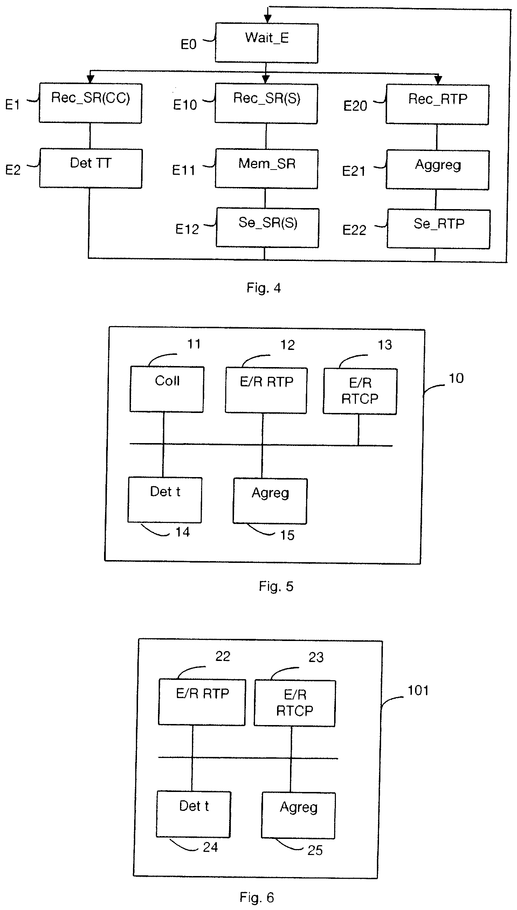

Le procédé de communication dans un groupe de diffusion tel qu'il est mis en oeuvre par le par le client 201 de collecte va maintenant être décrit en relation avec la figure 4.

Dans une étape E0, le client 201 est en attente d'un événement.

Si on détecte lors d'une étape E1 que l'événement est une réception d'un paquet RTCP SR en provenance d'un autre client de collecte, le client 201 de collecte détermine dans l'étape E2 de détermination de temps de transmission, telle que décrite précédemment, à partir d'un premier paquet RTCP SR 602 reçu en provenance de l'autre client 202 de collecte et relatif à l'échange de données de contrôle entre l'autre client 202 de collecte et le serveur, de paquets RTCP SR reçu en provenance du serveur 101 de collecte et relatifs aux échanges de données de contrôle entre le serveur et les clients de collecte, le premier temps de transmission entre lui-même et le serveur 101 de collecte TA et le deuxième temps de transmission entre lui-même et l'autre client de collecte, par exemple TB pour le client 202 de collecte. Ainsi il est possible pour le client 201 de collecte de déterminer le deuxième temps de transmission entre lui-même et l'autre client de collecte sans avoir établi d'échange de données de contrôle avec cet autre client de collecte. Les ressources processeur et mémoire sont ainsi économisées. L'ajout d'un nouveau client de collecte dans le groupe de diffusion multicast est géré plus simplement, étant donné qu'il n'est pas nécessaire pour le client 201 de collecte d'établir un nouvel échange de données de contrôle.

Le procédé repasse ensuite à l'étape E0 en attente d'un événement.

Si on détecte lors d'une étape E10 que l'événement est une réception d'un paquet RTCP SR en provenance du serveur 101 de collecte, le client 201 de collecte mémorise dans une étape E11 le paquet RTCP SR reçu pour traitement ultérieur.

Puis, dans une étape E12, le client 201 de collecte transmet en mode multicast au serveur 101 de collecte un paquet RTCP SR 601 tel que décrit précédemment.

Le procédé repasse ensuite à l'étape E0 en attente d'un événement.

Si on détecte lors d'une étape E20 que l'événement est une réception de paquets RTP de données temps réel en provenance du serveur 101 de collecte et des clients de collecte, le procédé passe à une étape E21 d'agrégation. Pour mémoire, le paquet RTP reçu du serveur 101 de collecte comprend un agrégat partiel.

Dans cette étape E21 d'agrégation, le client 201 de collecte détermine un premier agrégat à partir des informations qu'il a lui-même collectées et des informations contenues dans les paquets RTP reçus des autres clients de collecte, dans lequel il prend en compte à l'aide des temps de transmission respectifs déterminés lors de l'étape E2 pour chaque client de collecte, un décalage temporel entre l'instant de la collecte de la donnée temps réel contenue dans le paquet RTP et l'instant de réception de ce paquet RTP. Plus précisément, les données temps réel sont agrégées en fonction de leurs instants d'émission respectifs déterminés à partir des temps de transmission déterminés.

Dans une variante à cette étape E21 d'agrégation, le client 201 de collecte détermine un deuxième agrégat à partir des informations qu'il a lui-même collectées, de l'agrégat partiel contenu dans le paquet RTP reçu du serveur 101 de collecte et des informations contenues dans les paquets RTP reçus des autres clients de collecte, dans lequel il prend en compte à l'aide des temps de transmission respectifs déterminés lors de l'étape E2 pour le serveur 101 de collecte et pour chaque client de collecte, un décalage temporel entre l'instant de la collecte de l'information temps réel contenue dans le paquet RTP et l'instant de réception de ce paquet RTP. Plus précisément, les données temps réel sont agrégées en fonction de leurs instants d'émission respectifs déterminés à partir des temps de transmission déterminés.

Dans une variante de cette étape E21 d'agrégation, le client 201 de collecte écarte les paquets RTP reçus en provenance du serveur 101 de collecte et de clients de collecte dont les temps de transmission respectifs déterminés par le client 201 de collecte lors de l'étape E2 sont supérieurs à un premier seuil.

Dans une autre variante de cette étape E21 d'agrégation, le client 201 de collecte écarte les paquets RTP reçus en provenance du serveur et de clients de collecte pour lesquels une qualité de transport est inférieure à un deuxième seuil. La qualité de transport, notamment la gigue ou la perte de paquets RTP, peut être déterminée conformément à la RFC3550 à partir de paramètres inscrits dans les paquets RTP (qualité perçue par le client), tels qu'un numéro de séquence, un instant d'émission, un instant de réception, ou bien à partir de paramètres inscrits dans les paquets RTCP (qualité perçue par le serveur) tels qu'un taux de perte de paquet, une gigue,...

Dans encore une autre variante de cette étape E21 d'agrégation, le client 201 de collecte écarte les paquets RTP reçus en provenance du serveur 101 de collecte et de clients de collecte pour lesquels un taux de paquets perdus contenu dans le paquet RTCP SR reçu est supérieur à un troisième seuil.

Dans encore une autre variante de cette étape E21 d'agrégation, le client 201 de collecte écarte les paquets RTP reçus en provenance du serveur et de clients de collecte pour lesquels une gigue inter-arrivée contenue dans le paquet RTCP SR reçu est supérieure à un quatrième seuil.

Ces différentes variantes peuvent être effectuées seules ou en combinaison.

Puis dans une étape E22, le client 201 de collecte transmet dans un paquet RTP la différence entre le premier agrégat déterminé et l'agrégat partiel reçu du serveur 101 de collecte et des informations contenues dans les paquets RTP reçus des autres clients de collecte au serveur 101 de collecte et aux autres clients de collecte du groupe de diffusion en mode multicast.

Dans une variante à cette étape E22, le client 201 de collecte transmet dans un paquet RTP la différence entre le premier agrégat déterminé et les informations contenues dans les paquets RTP reçus des autres clients de collecte au serveur 101 de collecte et aux autres clients de collecte du groupe de diffusion en mode multicast.

Dans une autre variante à cette étape E22, le client 201 de collecte transmet dans un paquet RTP la différence entre le premier agrégat déterminé, l'agrégat partiel reçu du serveur 101 de collecte et les informations contenues dans les paquets RTP reçus des autres clients de collecte au serveur 101 de collecte et aux autres clients de collecte du groupe de diffusion en mode multicast.

Dans encore une autre variante à cette étape E22, le client 201 de collecte transmet dans un paquet RTP la différence entre le deuxième agrégat déterminé et l'agrégat partiel reçu du serveur 101 de collecte.

Dans encore une autre variante à cette étape E22, le client 201 de collecte transmet dans un paquet RTP la différence entre le deuxième agrégat déterminé et les informations contenues dans les paquets RTP reçus des autres clients de collecte au serveur 101 de collecte et aux autres clients de collecte du groupe de diffusion en mode multicast.

Dans encore une autre variante à cette étape E22, le client 201 de collecte transmet dans un paquet RTP la différence entre le deuxième agrégat déterminé, l'agrégat partiel reçu du serveur 101 de collecte et les informations contenues dans les paquets RTP reçus des autres clients de collecte au serveur 101 de collecte et aux autres clients de collecte du groupe de diffusion en mode multicast.

L'information temps réel envoyée ainsi par le client 201 de collecte est d'une part corrélée avec le retour d'information fourni par le serveur 101 de collecte au moyen de l'agrégat partiel et apporte d'autre part une redondance la plus faible possible avec l'agrégat partiel. Cela permet au serveur 101 de collecte d'agréger des informations RTP corrélées entre elle et comportant un maximum d'information complémentaire.

Par ailleurs, les premier et deuxième agrégats peuvent être consultés localement au client 201 de collecte.

Le procédé repasse à l'étape E0 en attente d'un événement.

La description d'un mode de réalisation a été effectuée en considérant que le serveur 101 de collecte émet une donnée de contrôle pour chaque client de collecte. Le serveur 101 de collecte peut également transmettre une pluralité de données de contrôle dans un seul message RTCP SR 501. Le mode de réalisation est alors adapté. Dans ce cas, à l'étape E2, la formule de détermination du deuxième temps de transmission est adaptée en prenant en compte que la différence entre les instants d'émission respectifs des données de contrôle RTCP SR 501 et RTCP SR 502, c'est-à-dire Q-O, est nulle. De plus, à l'étape F3, le serveur 101 de collecte transmet une seule donnée de contrôle relative aux échanges de données de contrôle qu'il a avec les différents clients de collecte.

Il est également possible de prévoir un mode de réalisation mixte, dans lequel le serveur 101 de collecte peut transmettre un premier message RTCP SR pour un premier ensemble de clients de collecte, par exemple trente et un clients de collecte, puis un deuxième message RTCP SR pour un deuxième ensemble de clients de collecte.

Un dispositif de communication dans un groupe de diffusion d'un client 201 de collecte va maintenant être décrit en relation avec la figure 5.

Un tel dispositif 10 comprend :

- un module 11 d'obtention d'informations temps réel, agencé pour collecter des informations temps réel ;
- un module 12 d'émission et de réception de données temps réel pour un groupe de diffusion en mode multicast ;
- un module 13 d'émission et de réception de données de contrôle pour un groupe de diffusion ;
- un module 14 de détermination d'un temps de transmission entre le client de collecte et un autre membre du groupe ;
- un module 15 d'agrégation de données temps réel.

Le module 13 d'émission et de réception de données de contrôle est en outre agencé pour :

- établir un premier échange de données de contrôle entre le client de collecte et le serveur, les données de contrôle étant émises en mode multicast ;
- extraire des premières informations temporelles de données de contrôle reçues relatives à un deuxième échange de données de contrôle d'un autre client de collecte du groupe avec le serveur ;
- extraire des deuxièmes informations temporelles de données de contrôle reçues du serveur et relatives au premier échange de données de contrôle entre le client de collecte et le serveur ;
- extraire des troisièmes informations temporelles de données de contrôle reçues du serveur et relatives au deuxième échange de données de contrôle entre l'autre client de collecte et le serveur.

Le module 14 de détermination de temps de transmission est agencé pour :

- déterminer à partir des deuxièmes informations temporelles extraites un premier temps de transmission TA entre le client de collecte et le serveur ;
- déterminer à partir des premières, deuxièmes et troisièmes informations temporelles extraites un deuxième temps de transmission TB entre le client de collecte et l'autre client de collecte.

Le module 15 d'agrégation est agencé pour :

- déterminer un premier agrégat à partir des informations collectées par le module 11, de données temps réel reçues par le module 12 en provenance du serveur et des autres client de collecte du groupe, les instants d'émission des données reçues étant déterminés à partir des temps de transmission respectifs ;
- déterminer une donnée temps réel correspondant à une différence entre des informations collectées par le module 11, de données temps réel reçues par le module 12 en provenance du serveur et des autres clients de collecte du groupe, les instants d'émission des données reçues étant déterminés à partir des temps de transmission respectifs;
- transmettre la donnée temps réel déterminée au module 12 d'émission de données temps réel.

Un serveur 101 de collecte de données temps réel va maintenant être décrit en relation avec la figure 6.
Le serveur 101 de collecte comprend :

- un module 22 d'émission et de réception de données temps réel pour un groupe de diffusion en mode multicast ;
- un module 23 d'émission et de réception de données de contrôle pour un groupe de diffusion ;
- un module 24 de détermination d'un temps de transmission TC entre lui-même et un autre membre du groupe ;
- un module 25 d'agrégation de données temps réel.

Le module 23 d'émission et de réception de données de contrôle est en outre agencé pour :

- établir un échange de données de contrôle par client de collecte du groupe de diffusion, les données de contrôle étant émises par le serveur en mode multicast ;
- extraire des informations temporelles de données de contrôle reçues relatives à un échange de données de contrôle entre lui-même et un client de collecte du groupe.

Le module 24 de détermination de temps de transmission est agencé pour :

- pour chaque client de collecte du groupe, déterminer à partir des informations temporelles extraites un temps de transmission TC entre le client de collecte et le serveur.

Le module 25 d'agrégation est agencé pour :

- déterminer un agrégat total à partir de données temps réel reçues par le module 22 en provenance des clients de collecte du groupe, les instants d'émission des données reçues étant déterminés à partir des temps de transmission respectifs ;
- transmettre l'agrégat total déterminé au module 22 d'émission de données temps réel.

Le module 25 d'agrégation peut également être agencé pour déterminer un agrégat partiel, dans lequel les sources pour lesquelles les temps de transmission respectifs sont supérieurs à un seuil prédéterminé sont écartées, cet agrégat partiel étant transmis en lieu et place de l'agrégat total.
Les modules 12, 13, 14, 15 du dispositif 10 de communication dans un groupe de diffusion sont agencés pour mettre en oeuvre celles des étapes du procédé précédemment décrit exécutées par le dispositif. Il s'agit de préférence de modules logiciels comprenant des instructions logicielles pour faire exécuter celles des étapes du procédé précédemment décrit, mises en oeuvre par un dispositif. L'invention concerne donc aussi :

- un programme pour dispositif, comprenant des instructions de programme destinées à commander l'exécution de celles des étapes du procédé précédemment décrit qui sont exécutées par ledit dispositif, lorsque ledit programme est exécuté par un processeur de celui-ci ;
- un support d'enregistrement lisible par un dispositif de communication dans un groupe de diffusion sur lequel est enregistré le programme pour dispositif de communication dans un groupe de diffusion.

Les modules 22, 23, 24, 25 du serveur 101 de collecte sont agencés pour mettre en oeuvre celles des étapes du procédé précédemment décrit exécutées par le serveur. Il s'agit de préférence de modules logiciels comprenant des instructions logicielles pour faire exécuter celles des étapes du procédé précédemment décrit, mises en oeuvre par un serveur. L'invention concerne donc aussi :

- un programme pour serveur, comprenant des instructions de programme destinées à commander l'exécution de celles des étapes du procédé précédemment décrit qui sont exécutées par ledit serveur, lorsque ledit programme est exécuté par un processeur de celui-ci ;
- un support d'enregistrement lisible par un serveur sur lequel est enregistré le programme pour serveur.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système de communication dans un groupe de diffusion, ce groupe comprenant un ensemble de sources émettrices de données temps réel composé d'au moins deux sources et un serveur tel que décrit précédemment, les sources comprenant un dispositif de communication dans un groupe de diffusion tel que décrit précédemment.

On note que les paquets RTP ou RTCP peuvent être transportés sur n'importe quel type de réseau de télécommunication, par exemple :

- des réseaux synchrones SDH pour "Synchronous Digital Hierarchy" ou encore SONET pour "Synchronous Optical Network" au moyen d'une adaptation POS pour "Packet Over Sonet/SDH" définie dans le RFC 2615,

- des réseaux asynchrones à commutation de cellules comme l'ATM pour "Asynchronous Transfer Mode" au moyen d'une adaptation telle que AAL2 ("ATM Adaptation Layer 2") définie par l'ITU ("International Télécommunication Union") dans la recommandation 1.363.2 ou AAL5 ("ATM Adaptation Layer 5") définie dans la recommandation 1.363.5,

- des réseaux à commutation de trames Ethernet constitués par exemple de ponts Ethernet défini par l'IEEE ("Institute of Electrical and Electronics Engineers") dans le standard 802.1, ou d'anneaux Ethernet définis dans la norme 802.17, de liens Ethernet filaires définis dans le standard 802.3, de liens Ethernet radio sans gestion de qualité définis dans le standard 802.11 ou de liens Ethernet radio avec gestion de qualité et de mobilité définis dans le standard 802.16,

- des réseaux à commutation de paquets IP (Internet Protocol) IPv4 ou IPv6 définis par l'IETF (Internet Engineering Task Force) dans les RFC 791 et RFC 2460,

- des réseaux mobiles en mode paquet comme par exemple le GPRS ("General Packet Radio Service") ou l'UMTS ("Universal Mobile Télécommunications System"), ou encore LTE (Long Term Evolution) / SAE (System Architecture Evolution), définis dans les standards 3GPP ("3rd Génération Partnership Project").

## Revendications

1. Procédé de communication dans un groupe de diffusion, ledit groupe comprenant un ensemble de sources émettrices de données temps réel composé d'au moins deux sources (201, 202) et un serveur (101), ledit procédé comprenant les étapes suivantes mises en oeuvre par une première source du groupe :

    - émission (E12), par diffusion aux membres du groupe, d'une première donnée de contrôle RTCP SR (601) comprenant des informations temporelles relatives à un échange de données de contrôle RTCP SR entre le serveur (101) et la première source (201);

    - réception (E1), en provenance d'une deuxième source, d'une deuxième donnée de contrôle RTCP SR (602) comprenant des informations temporelles relatives à un échange de données de contrôle RTCP SR entre le serveur (101) et la deuxième source (202);

    - réception (E10), en provenance du serveur, d'une troisième donnée de contrôle RTCP SR (501), et d'une quatrième donnée de contrôle RTCP SR (502),

    la troisième donnée de contrôle RTCP SR (501) comprenant des informations temporelles relatives à la première donnée de contrôle RTCP SR (601),

    et la quatrième donnée de contrôle RTCP SR (502) comprenant des informations temporelles relatives à la deuxième donnée de contrôle RTCP SR (602);

    - détermination (E2) à partir desdites données de contrôle RTCP SR (601, 602, 501, 502) d'un temps de transmission entre les première et deuxième sources;

lesdites informations temporelles étant comprises dans une donnée de contrôle RTCP SR, relatives à un échange entre une première source émettrice et une deuxième source émettrice, une des deux sources émettrices étant le serveur, et comprenant:

    - dans un champ NTP, un instant d'émission, par la première source émettrice, de la donnée de contrôle;

    - dans un champ LSR, un instant d'émission, par la deuxième source émettrice, d'une autre donnée de contrôle reçue par la première source émettrice;

    - dans un champ DLSR, une durée écoulée entre un instant de réception de l'autre donnée de contrôle et l'instant d'émission de la donnée de contrôle.

2. Procédé selon la revendication 1, comprenant en outre :

    - une étape (E20) de réception en provenance du serveur d'une agrégation des données temps réel émises par l'ensemble des sources émettrices ;

    - une étape (E21) de détermination d'une donnée temps réel correspondant à une différence entre des informations temps réel collectées par la première source, l'agrégation reçue et des données temps réel reçues en provenance des autres sources émettrices, les instants d'émission des données reçues étant déterminés à partir des temps de transmission respectifs ;
- une étape (E22) d'émission de la donnée temps réel en mode multicast.

3. Procédé selon la revendication 1, comprenant en outre une étape d'agrégation des données temps réel reçues, les instants d'émission des données reçues étant déterminés à partir des temps de transmission respectifs.

4. Dispositif (10) de communication dans un groupe de diffusion comprenant un ensemble de sources émettrices de données temps réel composé d'au moins deux sources (201, 202) et un serveur (101), ledit dispositif étant mis en oeuvre dans une des sources émettrices de données temps réel et comprenant :

   - un module (13) d'émission d'une première donnée de contrôle RTCP SR (601) comprenant des informations temporelles relatives à un échange entre le serveur (101) et la source (201);
   - un module (13) de réception d'une deuxième donnée de contrôle RTCP SR (602) émise par une autre source (202), comprenant des informations temporelles relatives à un échange entre le serveur (101) et l'autre source (202);
   - un module (13) de réception d'une troisième donnée de contrôle RTCP SR (501), émise par le serveur (101), comprenant des informations temporelles relatives à la première donnée de contrôle (601);
   - un module (13) de réception d'une quatrième donnée de contrôle RTCP SR (502), émise par le serveur (101), comprenant des informations temporelles relatives à la deuxième donnée de contrôle (602);
   - un module (14) de détermination, à partir desdites données de contrôle RTCP SR (601, 602, 501, 502), d'un temps de transmission entre la source et l'autre source;

   lesdites informations temporelles étant comprises dans une donnée de contrôle de type RTCP SR, relatives à un échange entre une première source émettrice et une deuxième source émettrice, une des deux sources émettrices étant le serveur, et comprenant:

   - dans un champ NTP, un instant d'émission, par la première source émettrice, de la donnée de contrôle;
   - dans un champ LSR, un instant d'émission, par la deuxième source émettrice, d'une autre donnée de contrôle reçue par la première source émettrice;
   - dans un champ DLSR, une durée écoulée entre un instant de réception de l'autre donnée de contrôle et l'instant d'émission de la donnée de contrôle.

5. Système de communication dans un groupe de diffusion, ledit groupe comprenant un ensemble de sources (201, 202) émettrices de données temps réel composé d'au moins deux sources et un serveur, les sources comprenant un dispositif (10) de communication dans un groupe de diffusion selon la revendication 4 et le serveur comprenant :

   - un module (23) de réception d'une donnée de contrôle RTCP SR (601, 602) émise par une source (201, 202), comprenant des informations temporelles relatives à un échange entre le serveur (101) et la source (201, 202);
   - un module (23) d'émission de données de contrôle RTCP SR (501, 502), comprenant des informations temporelles relatives à des échanges entre le serveur (101) et les sources (201, 202).

6. Système de communication selon la revendication 5, dans lequel le serveur comprend en outre un module (25) d'agrégation de données temps réel émises par les sources en fonction d'un décalage temporel entre un instant de collecte d'une donnée temps réel et un instant de réception au serveur de ladite donnée.

7. Programme d'ordinateur comportant des instructions pour la mise en oeuvre du procédé de communication dans un groupe de diffusion selon la revendication 1 par un dispositif de communication dans un groupe de diffusion, lorsque ce programme est exécuté par un processeur.

**Patentansprüche**

1. Verfahren zur Kommunikation in einer Verbreitungsgruppe, wobei die Gruppe eine Gesamtheit von Sendequellen von Echtzeitdaten, bestehend aus mindestens zwei Quellen (201, 202) und einem Server (101), umfasst, wobei das Verfahren die folgenden Schritte umfasst, die von einer ersten Quelle der Gruppe eingesetzt werden:

   - Senden (E12), durch Verbreitung an die Mitglieder der Gruppe, eines ersten Kontrolldatums RTCP SR (601), umfassend Zeitinformationen in Zusammenhang mit einem Austausch von Kontrolldaten RTCP SR zwischen dem Server (101) und der ersten Quelle (201);

- Empfangen (E1) von einer zweiten Quelle eines zweiten Kontrolldatums RTCP SR (602), umfassend Zeitinformationen in Zusammenhang mit einem Austausch von Kontrolldaten RTCP SR zwischen dem Server (101) und der zweiten Quelle (202);

- Empfangen (E10) von dem Server eines dritten Kontrolldatums RTCP SR (501) und eines vierten Kontrolldatums RTCP SR (502),

wobei das dritte Kontrolldatum RTCP SR (501) Zeitinformationen in Zusammenhang mit dem ersten Kontrolldatum RTCP SR (601) umfasst, und wobei das vierte Kontrolldatum RTCP SR (502) Zeitinformationen in Zusammenhang mit dem zweiten Kontrolldatum RTCP SR (602) umfasst;

- Bestimmen (E2) aus den Kontrolldaten RTCP SR (601, 602, 501, 502) einer Übertragungszeit zwischen den ersten und den zweiten Quellen;

wobei die Zeitinformationen in einem Kontrolldatum RTCP SR in Zusammenhang mit einem Austausch zwischen einer ersten Sendequelle und einer zweiten Sendequelle enthalten sind, wobei eine der beiden Sendequellen der Server ist, und umfassend:

- in einem Feld NTP einen Sendezeitpunkt des Kontrolldatums durch die erste Sendequelle;
- in einen Feld LSR einen Sendezeitpunkt eines weiteren Kontrolldatums durch die zweite Sendequelle, das von der ersten Sendequelle empfangen wird;
- in einem Feld DLSR eine Dauer, die zwischen einem Empfangszeitpunkt des weiteren Kontrolldatums und dem Sendezeitpunkt des Kontrolldatums vergangen ist.

2. Verfahren nach Anspruch 1, ferner umfassend:

- einen Schritt (E20) des Empfangens von dem Server einer Aggregation der von der Gesamtheit der Sendequellen gesandten Echtzeitdaten;
- einen Schritt (E21) der Bestimmung eines Echtzeitdatums entsprechend einer Differenz zwischen von der ersten Quelle gesammelten Echtzeitinformationen, der empfangenen Aggregation und von den weiteren Sendequellen empfangenen Echtzeitdaten, wobei die Sendezeitpunkte der empfangenen Daten aus den jeweiligen Übertragungszeiten bestimmt werden;
- einen Schritt (E22) des Sendens des Echtzeitdatums im Multicast-Modus.

3. Verfahren nach Anspruch 1, ferner umfassend einen Schritt der Aggregation der empfangenen Echtzeitdaten, wobei die Sendezeitpunkte der empfangenen Daten aus den jeweiligen Übertragungszeiten bestimmt werden.

4. Vorrichtung (10) zur Kommunikation in einer Verbreitungsgruppe, umfassend eine Gesamtheit von Sendequellen von Echtzeitdaten, bestehend aus mindestens zwei Quellen (201, 202) und einem Server (101), wobei die Vorrichtung in einer der Sendequellen von Echtzeitdaten eingesetzt wird und umfasst:

- ein Modul (13) zum Senden eines ersten Kontrolldatums RTCP SR (601), umfassend Zeitinformationen in Zusammenhang mit einem Austausch zwischen dem Server (101) und der Quelle (201);
- ein Modul (13) zum Empfangen eines zweiten Kontrolldatums RTCP SR (602), das von einer weiteren Quelle (202) gesandt wird, umfassend Zeitinformationen in Zusammenhang mit einem Austausch zwischen dem Server (101) und der weiteren Quelle (202);
- ein Modul (13) zum Empfangen eines dritten Kontrolldatums RTCP SR (501), das vom Server (101) gesandt wird, umfassend Zeitinformationen in Zusammenhang mit dem ersten Kontrolldatum (601);
- ein Modul (13) zum Empfangen eines vierten Kontrolldatums RTCP SR (502), das vom Server (101) gesandt wird, umfassend Zeitinformationen in Zusammenhang mit dem zweiten Kontrolldatum (602);
- ein Modul (14) zum Bestimmen aus den Kontrolldaten RTCP SR (601, 602, 501, 502) einer Übertragungszeit zwischen der Quelle und der weiteren Quelle;

wobei die Zeitinformationen in einem Kontrolldatum vom Typ RTCP SR in Zusammenhang mit einem Austausch zwischen einer ersten Sendequelle und einer zweiten Sendequelle enthalten sind, wobei eine der beiden Sendequellen der Server ist, und umfassend:

- in einem Feld NTP einen Sendezeitpunkt des Kontrolldatums durch die erste Sendequelle;
- in einen Feld LSR einen Sendezeitpunkt eines weiteren Kontrolldatums durch die zweite Sendequelle, das von der ersten Sendequelle empfangen wird;
- in einem Feld DLSR eine Dauer, die zwischen einem Empfangszeitpunkt des weiteren Kontrolldatums und dem Sendezeitpunkt des Kontrolldatums vergangen ist.

5. System zur Kommunikation in einer Verbreitungsgruppe, umfassend eine Gesamtheit von Sendequellen (201, 202) von Echtzeitdaten, bestehend aus mindestens zwei Quellen und einem Server, wobei die Quellen eine Vorrichtung (10) zur Kommunikation in einer Verbreitungsgruppe nach Anspruch 4 umfassen, und wobei der Server umfasst:

- ein Empfangsmodul (23) eines Kontrolldatums RTCP SR (601, 602), das von einer Quelle (201, 202) gesandt wird, umfassend Zeitinformationen in Zusammenhang mit einem Austausch zwischen dem Server (101) und der Quelle (201, 202);
- ein Sendemodul (23) von Kontrolldaten RTCP SR (501, 502), umfassend Zeitinformationen in Zusammenhang mit Austauschen zwischen dem Server (101) und den Quellen (201, 202).

6. Kommunikationssystem nach Anspruch 5, bei dem der Server ferner ein Aggregationsmodul (25) der von den Quellen gesandten Echtzeitdaten in Abhängigkeit von einem Zeitversatz zwischen einem Sammelzeitpunkt eines Echtzeitdatums und einem Empfangszeitpunkt des Datums am Server umfasst.

7. Computerprogramm, umfassend Befehle für den Einsatz des Kommunikationsverfahrens in einer Verbreitungsgruppe nach Anspruch 1 durch eine Vorrichtung zur Kommunikation in einer Verbreitungsgruppe, wenn dieses Programm durch einen Prozessor ausgeführt wird.

## Claims

1. Method of communication in a broadcast group, the said group comprising a set of real-time data emitter sources composed of at least two sources (201, 202) and a server (101), the said method comprising the following steps carried out by a first source of the group:

- transmission (E12), by broadcasting to the members of the group, of a first RTCP SR control datum (601) comprising temporal information relating to an exchange of RTCP SR control data between the server (101) and the first source (201);
- reception (E1), from a second source, of a second RTCP SR control datum (602) comprising temporal information relating to an exchange of RTCP SR control data between the server (101) and the second source (202);
- reception (E10), from the server, of a third RTCP SR control datum (501) and of a fourth RTCP SR control datum (502), the third RTCP SR control datum (501) comprising temporal information relating to the first RTCP SR control datum (601), and the fourth RTCP SR control datum (502) comprising temporal information relating to the second RTCP SR control datum (602);
- determination (E2), on the basis of the said RTCP SR control data (601, 602, 501, 502) of a transmission time between the first and second sources;

the said temporal information being contained in an RTCP SR control datum, relating to an exchange between a first emitter source and a second emitter source, one of the two emitter sources being the server, and comprising:

- in a field NTP, an instant of transmission by the first emitter source of the control datum;
- in a field LSR, an instant of transmission by the second emitter source of another control datum received by the first emitter source;
- in a field DLSR, a duration elapsed between an instant of reception of the other control datum and the instant of emission of the control datum.

2. Method according to Claim 1, furthermore comprising:

- a step (E20) of reception from the server of an aggregate of real-time data transmitted by the set of emitter sources;
- a step (E21) of determining a real-time datum corresponding to a difference between real-time information collected by the first source, the aggregate received and the real-time data received from the other emitter sources, the transmission instants of the received data being determined on the basis of the respective transmission times;
- a step (E22) of transmitting the real-time datum in multicast mode.

3. Method according to Claim 1, furthermore comprising a step of aggregating received real-time data, the transmission instants of the received data being determined on the basis of the respective transmission times.

4. Device (10) for communication in a broadcast group comprising a set of real-time data emitter sources composed of at least two sources (201, 202) and a server (101), the said device being carried out in one of the real-time data emitter sources and comprising:

- a module (13) for transmission of a first RTCP SR control datum (601) comprising temporal information relating to an exchange between the server (101) and the source (201);
- a module (13) for reception of a second RTCP SR control datum (602) transmitted by another source (202), comprising temporal information relating to an exchange between the server (101) and the other source (202);

- a module (13) for reception of a third RTCP SR control datum (501), transmitted by the server (101), comprising temporal information relating to the first control datum (601);

- a module (13) for reception of a fourth RTCP SR control datum (502), transmitted by the server (101), comprising temporal information relating to the second control datum (602);

- a module (14) for determining a transmission time between the source and the other source on the basis of the said RTCP SR control data (601, 602, 501, 502);

the said temporal information being contained in an RTCP SR control datum, relating to an exchange between a first emitter source and a second emitter source, one of the two emitter sources being the server, and comprising:

- in a field NTP, an instant of transmission by the first emitter source of the control datum;
- in a field LSR, an instant of transmission by the second emitter source of another control datum received by the first emitter source;
- in a field DLSR, a duration elapsed between an instant of reception of the other control datum and the instant of emission of the control datum.

5. System for communication in a broadcast group, the said group comprising a set of real-time data emitter sources (201, 202) composed of at least two sources and a server, the sources comprising a device (10) according to Claim 4 for communication in a broadcast group, and the server comprising:

- a module (23) for reception of an RTCP SR control datum (601, 602), transmitted by a source (201, 202), comprising temporal information relating to an exchange between the server (101) and the source (201, 202);
- a module (23) for transmission of RTCP SR control data (501, 502) comprising temporal information relating to exchanges between the server (101) and the sources (201, 202).

6. Communication system according to Claim 5, wherein the server furthermore comprises a module (25) for aggregation of real-time data transmitted by the sources as a function of a temporal offset between an instant of collection of a real-time datum and instant of reception of the said datum at the server.

7. Computer program comprising instructions for carrying out the method of communication in a broadcast group according to Claim 1 by a communication device in a broadcast group, when this program is executed by a processor.

Fig. 1

Fig. 3

Fig. 2

Fig. 4

Fig. 5

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030147386 A

- US 20040066775 A

**Littérature non-brevet citée dans la description**

- **LIU J. et al.** Distributed distance measurement for large-scale networks. *Computer Networks: The International Journal of Computer and Télécommunications Networking,* 2003, vol. 41, 177-192